# EUROPEAN PATENT APPLICATION

(11) **EP 3 862 724 A2**
(43) Date of publication of application: **11.08.2021**
(21) Application number: 21177711.5
(22) Date of filing: 04.06.2021
(51) Int. Cl.: G01C 21/32, G01C 21/36

(54) **NAVIGATION MAP EVALUATION METHOD AND APPARATUS, DEVICE AND READABLE STORAGE MEDIUM**

(30) Priority: 27.11.2020 CN 202011357823
(71) Applicant: BEIJING BAIDU NETCOM SCIENCE TECHNOLOGY CO., LTD., No.10 Shangdi 10th Street Haidian District Beijing 100085 (CN)
(72) Inventor: HE, Lili, Haidian District (CN); ZHU, Hongfei, Haidian District (CN); YANG, Peng, Haidian District (CN)
(74) Representative: Poskett, Oliver James

(57) **Abstract**

The present application relates to the technical field of intelligent transportation, electronic map, and positioning and navigation and, in particular, to a navigation map evaluation method and apparatus, a device and a readable storage medium. The electronic device acquires a travelling simulation video of the road section to be tested and a real environment image of each location point on the road section to be tested, generates a linkage video according to the navigation simulation image and the real environment image of each location point on the road section to be tested, and evaluates a first map according to the linkage video. In the process, the navigation map is evaluated through a way of simulation, which achieves the purpose of reducing the cost of manpower and material resources in the process of the navigation map evaluation.

## Description

### TECHNICAL FIELD

The present application relates to the technical field of intelligent transportation, electronic map, and positioning and navigation and, in particular, to a navigation map evaluation method and apparatus, a device and a readable storage medium.

### BACKGROUND

After a map product launches, the quality of the map product needs to be evaluated to ensure the quality of the map product.

The common evaluation scheme is the field road test scheme. In the scheme, the map product is installed in a mobile terminal, such as a mobile phone. The map product is opened in the mobile terminal to perform field navigation. Problems are recorded during the navigation process and the map product is evaluated according to the problems.

In the above-mentioned field road test scheme, field travelling navigation or walking navigation is required, and thus the cost of manpower and material resources is high.

### SUMMARY

This application provides a navigation map evaluation method, apparatus, device and readable storage medium, which evaluate a map product by a way of simulation, so as to achieve the purpose of reducing the cost of manpower and material resources in the process of map product evaluation.

In a first aspect, an embodiment of the present application provides a navigation map evaluation method, including: acquiring a travelling simulation video, where the travelling simulation video is: a simulation video that simulates a user travelling on a road section to be tested according to a navigation prompt of a first map, and the travelling simulation video includes: a navigation simulation image of the first map at each location point on the road section to be tested; acquiring a real environment image of each location point on the road section to be tested; generating a linkage video according to the navigation simulation image and the real environment image of each location point on the road section to be tested, where different frame images of the linkage video include: navigation simulation images and real environment images at different location points on the road section to be tested; and determining navigation performance of the first map according to the linkage video.

In a second aspect, an embodiment of the present application provides a navigation map evaluation apparatus, including:
a first acquisition module, configured to acquire a travelling simulation video, where the travelling simulation video is: a simulation video that simulates a user travelling on a road section to be tested according to a navigation prompt of a first map, and the travelling simulation video includes: a navigation simulation image of the first map at each location point on the road section to be tested.
a second acquisition module, configured to acquire a real environment image of each location point on the road section to be tested.
a linkage module, configured to generate a linkage video according to the navigation simulation image and the real environment image of each location point on the road section to be tested, where different frame images of the linkage video include: navigation simulation images and real environment images at different location points on the road section to be tested.
a determination module, configured to determine navigation performance of the first map according to the linkage video.

In a third aspect, an embodiment of the present application provides an electronic device, including:
at least one processor; and
a memory communicatively connected with the at least one processor; where:
   the memory stores thereon instructions executable by the at least one processor, and when being executed by at least one processor, the instructions cause the at least one processor to carry out the method according to the first aspect or the method according to any one of the possible implementations of the first aspect.

In a fourth aspect, an embodiment of the present application provides a computer program product including instructions, which, when running on an electronic device, causes the electronic device computer to carry out the method according to the first aspect or the method according to any one of the possible implementations of the first aspect.

In a fifth aspect, an embodiment of the present application provides a non-transitory computer-readable storage medium storing thereon computer instructions which are used to cause the electronic device to carry out the method according to the first aspect or the method according to any one of the possible implementations of the first aspect.

In a sixth aspect, an embodiment of the present application provides a navigation map evaluation method, including: determining a navigation path corresponding to a road section to be tested on the first map; using the navigation path to simulate a user travelling on the road section to be tested to obtain a travelling simulation video; acquiring a real environment image of each location point on the road section to be tested; generating a linkage video according to the real environment image and the travelling simulation video of each location point on the road section to be tested; and determining navigation performance of the first map according to the linkage video.

According to the technology of the present application, the navigation map is evaluated through a way of simulation, so as to achieve the purpose of reducing the cost of manpower and material resources in the navigation map evaluation process.

It should be understood that the content described in this section is not intended to identify the key or important features of the embodiments of the present application, nor to limit the scope of the present application. Other features of the present application will be easily understood through the following description.

### BRIEF DESCRIPTION OF DRAWINGS

The drawings are used for better understanding of the present solution but do not constitute any limitation on the present application. In the drawings:
FIG. 1 is a schematic diagram of a network architecture of a navigation map evaluation method provided in an embodiment of the present application;
FIG. 2 is a flowchart of a navigation map evaluation method provided in an embodiment of the present application;
FIG. 3 is a schematic diagram of a process of a navigation map evaluation method provided in an embodiment of the present application;
FIG. 4 is a schematic diagram of an image of a linkage video in a navigation map evaluation method provided in an embodiment of the present application;
FIG. 5 is a schematic structural diagram of a navigation map evaluation apparatus provided in an embodiment of the present application;
FIG. 6 is another navigation map evaluation apparatus provided in an embodiment of the present application;
FIG. 7 is a block diagram of an electronic device for implementing the navigation map evaluation method in an embodiment of the present application.

### DESCRIPTION OF EMBODIMENTS

The exemplary embodiments of the present application are described below with reference to the accompanying drawings, which include various details of the embodiments of the present application to facilitate understanding, which should be considered as merely exemplary. Therefore, those of ordinary skill in the art should realize that various changes and modifications may be made to the embodiments described herein without departing from the scope of the present application. Likewise, for clarity and conciseness, descriptions of well-known functions and structures are omitted in the following description.

Navigation maps are also referred to as map products, electronic maps, and etc., which are typically used for navigation, positioning, location search, and so on. The version of the navigation map before launching, that is, the version before facing ordinary users, is referred to as the gray version, and the version after launching is referred to as the launched version. After the navigation map launches, in order to ensure the quality of the navigation map, the navigation map needs to be evaluated. For example, after a certain function of the navigation map is optimized, the optimized navigation map needs to be evaluated. For another example, the present product is compared with competitive products.

The field road test scheme is typically used in the process of the current navigation map evaluation. For example, when the present product and a competitive product are compared, the present product and the competitive product are installed in two electronic devices respectively. Then, in the process of travelling from site A to site B, the two electronic devices are used for navigating at the same time, and problems of the present product and problems of the competitive product are recorded while navigating. Finally, which quality is better for the present product and competitive product is analyzed according to the problems of the present product and the problems of the competitive product.

In the above-mentioned field road test method, field travelling navigation or walking navigation is required, and thus the cost of manpower and material resources is high.

The embodiments of the present application intend to evaluate the navigation map by a way of simulation, so as to achieve the purpose of reducing the cost of manpower and material resources in the navigation map evaluation process.

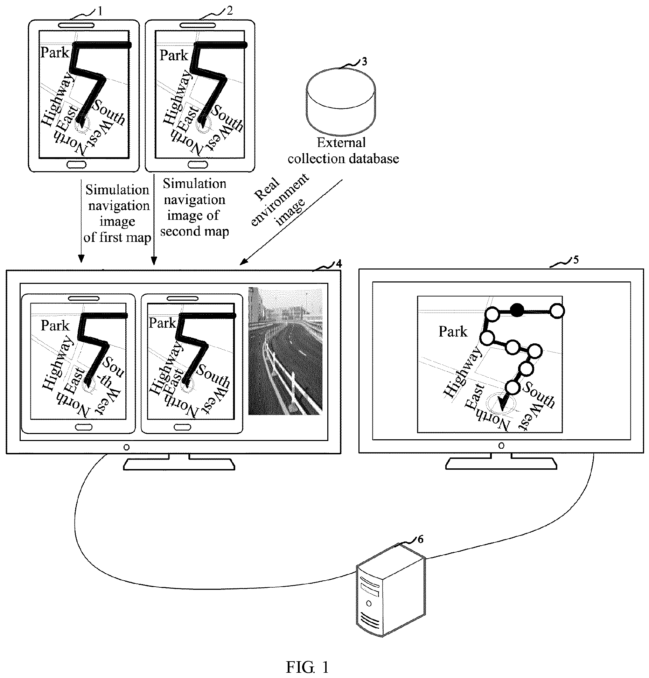

FIG 1 is a schematic diagram of a network architecture of a navigation map evaluation method provided in an embodiment of the present application. Please refer to FIG. 1, the network architecture includes an electronic device 1, an electronic device 2, an external collection database 3, a display screen 4, a display screen 5, and an electronic device 6. Where, the electronic device 1 is installed with a first map, and the electronic device 2 is installed with a second map. The electronic device 1 is configured to generate: a simulation video that simulates a user travelling on a road section to be tested according to a navigation prompt of the first map, and the electronic device 2 is configured to generate: a simulation video that simulates a user travelling on the road section to be tested according to a navigation prompt of the second map. The first map and the second map are competitive products for each other. Or the first map is an un-optimized product, and the second map is an optimized product. For example, a voice broadcast at a certain location point on the first map is wrong, and the voice broadcast at this location point on the second map is correct.

Before the navigation map evaluation, simulation navigation for the first map and simulation navigation for the second map are triggered, that is, not a real field navigation is triggered, but assuming that the user drives or walks on the road section to be tested at a certain speed. The electronic device 1 displays navigation effect of the first map. The electronic device 2 displays navigation effect of the second map. At the same time of navigation, a screen of the electronic device 1 and a screen of the electronic device 2 are recorded to obtain travelling simulation videos. Actually, the geographic locations of the electronic device 1 and the electronic device 2 have not changed during this process.

The electronic device 6 obtains the aforementioned travelling simulation videos. At the same time, the electronic device 6 obtains a real environment image of each location point on the road section to be tested from the external collection database. Since different location points correspond to different images in the travelling simulation videos, the electronic device 6 can obtain a linkage video based on the travelling simulation videos and the real environment image. Each frame image of the linkage video includes a navigation simulation image and a real environment image. The navigation simulation image and the real environment image in the same frame image correspond to the same location point. When only one of the electronic device 1 and the electronic device 2 is started, each frame image of the linkage video includes one navigation simulation image. When the electronic device 1 and the electronic device 2 are started simultaneously, each frame image of the linkage video includes two navigation simulation images.

The electronic device 6 controls the display screen 4 to display the linkage video, and simultaneously controls the display screen 5 to display each location point of the road section to be tested. Each location point in the display screen 5 is shown as a circle in the figure, and each location point corresponds to real map data, for example, whether there is an electronic eye or a traffic light, etc. at the location point. In so doing, for each location point, the electronic device 6 can determine an evaluation result of navigation effect of the first map for the location point and an evaluation result of navigation effect of the second map for the location point according to images and the real map data corresponding to the location point in the linkage video. After that, the two navigation maps can be evaluated.

In the architecture shown in FIG. 1 above, if only one navigation map is evaluated, there is no need to simultaneously use the electronic device 1 and the electronic device 2. If the navigation maps need to be compared, the electronic device 1 and the electronic device 2 are simultaneously used. For example, the two navigation maps to be compared are competitive products; or one of them is the navigation map before the function optimization, and the other is the navigation map after the function optimization.

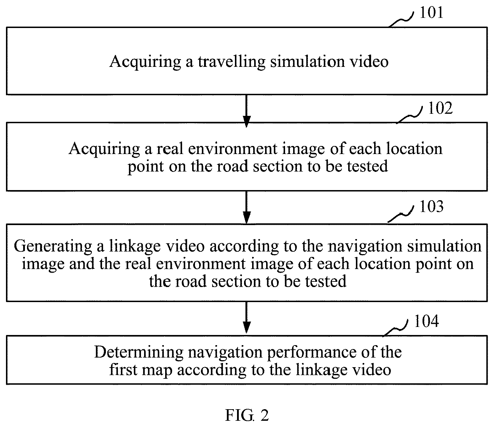

The navigation map evaluation method described in the embodiments of the present application will be described in detail below based on the network architecture shown in FIG. 1. Exemplarily, please refer to FIG. 2.

FIG. 2 is a flowchart of a navigation map evaluation method provided in an embodiment of the present application. The execution subject of this embodiment is, for instance, the electronic device 6 in the architecture shown in FIG. 1. This embodiment includes:
101, acquiring a travelling simulation video.

The travelling simulation video is: a simulation video that simulates a user travelling on a road section to be tested according to a navigation prompt of a first map, and the travelling simulation video includes: a navigation simulation image of the first map at each location point on the road section to be tested.

Please refer to FIG. 1 again, assuming that the electronic device 2 is not started. The electronic device 1 is configured to generate a simulation video that simulates the user travelling on the road section to be tested by using a navigation path of the first map. The navigation path is a path corresponding to the road section to be tested. At the same time of navigation, the electronic device 1 records the screen. After the navigation is finished, the electronic device 1 sends a screen recording result to the electronic device 6. Or, at the same time of the navigation, the electronic device 6 enables a camera to record a screen of the electronic device 1, thereby obtaining the travelling simulation video.

102. acquiring a real environment image of each location point on the road section to be tested.

In the embodiment of the present application, a large number of real environment images are stored in an external collection database. These real environment images are collected in accordance with a certain period and stored in the external collection database in advance. For example, real environment images of an expressway are collected and stored every three months. For another example, real environment images of areas, in which roads frequently change, such as a main urban area, are collected once a month. During the collection process, for a section of road, a real environment image is collected for each location point on the road, and the distance between adjacent location points is, for example, 5 to 8 meters, etc., which is not limited in the embodiment of the present application.

103. generating a linkage video according to the navigation simulation image and the real environment image of each location point on the road section to be tested.

The different frame images of the linkage video include: navigation simulation images and real environment images at different location points on the road section to be tested.

Exemplarily, there are multiple location points on the road to be tested, and each location point corresponds to one frame image in the travelling simulation video and also corresponds to one real environment image. Therefore, an electronic device can obtain images including both the navigation effect and the real environment images according to the location points, and then sort the images in the order of the location points and combine the images to obtain a linkage video. The different images included in the linkage video correspond to different location points, and one image of the linkage video includes the real environment image of the location point corresponding to the image and the navigation simulation image of the location point.

104. determining navigation performance of the first map according to the linkage video.

Exemplarily, after obtaining the linkage video, the electronic device can display a previous frame and a next frame, and etc., on the display screen 4 according to the operation instructions, such as forward and backward input by the user. For each image, the electronic device determines whether the navigation effect indicated by the navigation simulation image in the image is consistent with the real environment image, then obtains an evaluation result of each image, and thereby determines the navigation performance of the first map according to the evaluation result of each image in the linkage video.

In the navigation map evaluation method provided in this embodiment, the electronic device acquires the travelling simulation video of the road section to be tested and the real environment image of each location point on the road section to be tested, generates the linkage video according to the travelling simulation video and the real environment image of each location point on the road section to be tested, and evaluates the first map according to the linkage video. In the process, the navigation map is evaluated by a way of simulation, so as to achieve the purpose of reducing the cost of manpower and material resources in the navigation map evaluation process.

In the above embodiment, when the electronic device determines the navigation performance of the first map according to the linkage video, it firstly determines the evaluation result of the navigation simulation image included in each frame image in the linkage video to obtain multiple evaluation results. After that, problem level of each evaluation result of the multiple evaluation results is determined, and the problem level is used to indicate a degree of accuracy of the navigation prompt corresponding to the navigation simulation image. Finally, the navigation performance of the first map is determined according to the problem level of each evaluation result of the multiple evaluation results.

Exemplarily, different images of the linkage video correspond to navigation simulation images and real environment images at different location points. For each frame image, the electronic device analyzes whether the navigation effect indicated by the navigation simulation image in the image is consistent with the real environment image. If so, it means that the navigation effect is correct; if not, it means that the navigation effect is incorrect. At that point, the electronic device determines the problem level of the evaluation result. In this way, the electronic device can obtain the level corresponding to the evaluation result of the navigation effect of each location point, and weight respective evaluation results according to the problem levels, so as to obtain the evaluation result of the first map.

By using this solution, the electronic device evaluates the navigation effect of each frame image of the linkage video, so as to determine the navigation performance of the first map by synthesizing the evaluation results of respective frame images. The process is simple and the accuracy is high.

In the above embodiment, when the electronic device determines the evaluation result of the navigation simulation image included in each frame image of the linkage video to obtain multiple evaluation results, it determines real map data of location points corresponding to the first image for the real environment image included in the first image in the linkage video. The first image is any image included in the linkage video. Then, whether the navigation prompt corresponding to the navigation simulation image included in the first image is correct is determined according to the real map data, to obtain the evaluation result of the first image.

Exemplarily, please refer to FIG. 1 again. Each circle in the display screen 5 represents each location point in the road section to be tested. Different location points correspond to different real map data. The real map data is, for example, whether the location point has a camera, a traffic light, and so on. For each frame image in the linked video, the electronic device can determine the real map data of the location point corresponding to the image, and the image of the location point also includes the navigation effect. Therefore, the electronic device can determine the evaluation result of the navigation effect through comparing the navigation effect with the real map data.

After that, the electronic device flexibly switches images displayed on the display screen 4 according to the forward and backward operation instructions of the user. Meanwhile, by keeping the location point on display 4 and the location point on display 5 synchronized, the electronic device can determine the evaluation result of the navigation effect at each location point.

With the solution, the electronic device can flexibly determine the purpose of the evaluation result of the navigation effect of each location point.

In the foregoing embodiment, the electronic device generates the linkage video according to the travelling simulation video and the real environment image of each location point on the road section to be tested, then, when the navigation prompt corresponding to the navigation simulation image at the first location point on the road section to be tested includes voice navigation, the voice navigation is converted into a text. After that, the text is added to the image corresponding to the first position point in the linked video.

Exemplarily, the voice broadcast often occurs during the navigation process. However, it is inconvenient to listen to the voice broadcast information at any time during the process of the map evaluation. For this, if the navigation effect of the first location point is voice broadcast, the electronic device converts the voice navigation into a text and adds the text to the corresponding image of the first location point in the linkage video. During the evaluation process, only the text and the real map data need to be compared to obtain the evaluation result.

With this scheme, the electronic device converts the voice navigation result into a text, and evaluates the navigation effect according to the text, so that the evaluation is intuitively performed according to the text during the evaluation process, and the process is simple and efficient.

In the foregoing embodiment, the electronic device can obtain the travelling simulation video by a way of recording when acquiring the travelling simulation video. For example, please refer to FIG. 1 again. The electronic device 1 records the screen while simulating the navigation. After finishing the navigation, the electronic device 1 sends the screen recording result to the electronic device 6. For another example, at the same time of navigation, the electronic device 6 enables a camera to record the screen of the electronic device 1, thereby obtaining the travelling simulation video. For still another example, other devices with a recording function record the screen of the electronic device 1 to obtain the travelling simulation video and send it to the electronic device 6. For still another example, the electronic device 6 has a screen recording function and is installed with the first map. In the process of simulating that the user uses the first map to navigate through the road section to be tested, the electronic device 6 displays the navigation interface of the first map and plays voice information.

With this solution, the electronic device acquires the recorded travelling simulation video to prepare for the subsequent navigation map evaluation, so that there is no need for field road test during the navigation map evaluation, and the manpower, material resources and time cost of navigation map evaluation can be saved.

In the above embodiment, before recording the screen of the electronic device to obtain the travelling simulation video, the electronic device also deliveries the road section to be tested to the first map through the interface of the first map, to trigger an element representing the user on the first map to travel on the road section to be tested at a preset speed, so that the electronic device generates the navigation effect of the first map in the process of simulating the user to navigate through the road section to be test by using the first map.

Exemplarily, referring to FIG. 1 again. The electronic device 6 has a screen recording function, the electronic device 6 is installed with the first map having its own interface. The electronic device 6 delivers the road section to be tested to the first map through the interface, and then starts to simulate the navigation automatically or simulate navigation under triggering by the user. The element representing the user on the first map is triggered to travel on a navigation route of the first map at the preset speed, so that the electronic device generates the simulation video that simulates the user travelling on the road section to be tested according to the navigation prompt of the first map. The electronic device 6 enables the screen recording function while simulating the navigation to obtain a travelling simulation video.

For the same reason, when the electronic device 1 performs the simulation navigation, the electronic device 1 delivers the road section to be tested to the first map through the interface of the first map. After that, the electronic device 1 starts to simulate navigation automatically or simulate navigation under triggering by the user, so as to cause the element representing the user on an interface of the first map to move forward at the preset speed, so that the electronic device generates the simulation video that simulates the user travelling on the road section to be tested according to the navigation prompt of the first map. During this process, the electronic device 1 does not move at the aforementioned speed, but is at rest or move at another speed.

By adopting this solution, the purpose of simulating that the user travels on the road section to be tested according to the navigation prompt of the first map is realized.

In the above embodiment, the evaluation of the navigation map includes three cases: first, the evaluation of a single navigation map; second, competitive products evaluation, and third, vertical evaluation.

Please refer to FIG. 1. In the first case, only the electronic device 1 or the electronic device 2 needs to be used when only the first map is evaluated. When the electronic device 6 is installed with the first map, the electronic device 6 acquires the travelling simulation video by recording its own screen. At that point, there is no need to use both the electronic device 1 and the electronic device 2. After the linkage video based on the travelling simulation video and the real environment image are obtained, whether the navigation effect of each location point on the first map is correct or not is determined on the basis of the linkage video and the real map data of each location point, and then the first map is evaluated.

In the second case, electronic device 1 and the electronic device 2 are installed with the first map and the second map respectively, and the two navigation maps are competitive products. In the third case, the electronic device 1 and the electronic device 2 are installed with the first map and the second map respectively. The difference between the two navigation maps is that the first map is the product before optimizing and the second map is the product after optimizing. At that point, travelling simulation video further includes: a simulation video that simulates the user travelling on the road section to be tested according to the navigation prompt of the second map, and the travelling simulation video further includes: the navigation simulation image of each location point on the road section to be tested of the second map. Meanwhile, the different frame images of the linkage video include: the navigation simulation images of the first map, and the navigation simulation images of the second map and the real environment images, which correspond to different location points.

Exemplarily, referring to FIG. 1 again. In the process of recording the travelling simulation video, the screen of the electronic device 1 and the screen of the electronic device 2 are recorded simultaneously. Or, the electronic device 1 obtains a travelling simulation video by recording the screen, and the electronic device 2 obtains another travelling simulation video by recording the screen. There is one to one correspondence between the images in the two travelling simulation videos, and two images which have one to one correspondence correspond to the same location point. In so doing, one image of the linkage video can be obtained according to the two images corresponding to the location point and the real environment image corresponding to the location point.

After the electronic device 6 obtains the linkage video, for each frame image of the linkage video, the evaluation result of the navigation effect of the first map in the frame image and the evaluation result of the navigation effect of the second map in the frame image are determined. Subsequently, the first map is evaluated according to the evaluation result of each navigation effect of the first map, and the second navigation map is evaluated according to the evaluation result of each navigation effect of the second map, so as to realize the comparison between the first map and the second map.

For example, when the first map and the second map are competitive products, a navigation map with better navigation effect is determined from the first map and the second map according to the evaluation result of the first map and the evaluation result of the second map.

For another example, when the first map and the second map are vertical products, a badcase occurs in the first map at a certain location point, for example, a lane line at the location point is wrong, and the second map corrects the error. Through the above evaluation, it can be evaluated whether the navigation information of the second map at the location point is correct.

By using this scheme, the evaluation of the competitive products or the evaluation of the vertical products is realized.

In the above embodiment, the geographic region corresponding to the first map is very vast. If the first map is evaluated only according to one or several routes to be tested, the evaluation result is likely to be inaccurate. Therefore, in the above embodiment, there are multiple routes to be tested. The electronic device acquires multiple start points and end points within a target area before acquiring the travelling simulation video, where the target area belongs to the area covered by the first map. Then, the electronic device clusters the multiple start points and end points to obtain a set of road sections. The number of navigation requests for each road section to be tested in the plurality of road sections to be tested exceeds a preset threshold. The set of road sections includes a plurality of road sections to be tested. The road sections to be tested in the set of road sections are evenly distributed in the target area.

Exemplarily, the geographic region corresponding to the first map is very vast, and it is impossible to evaluate every road section in the geographic region. During the evaluation process, a target area is selected. The target area is, for example, a city, etc. After that, multiple road sections to be tested are selected from road sections in the city to obtain a set of road sections. The selection principles are: 1. selecting the road sections corresponding to the start points and the end points where the number of user requests exceeds the preset number; 2. the set of road sections evenly distributing in the target area. The target area is a subset or a complete set of the geographic region corresponding to the first map.

For principle 1, after the first map launches, many users will use the first map every day. In the process of using, users input the start points and the end points, and a server of the first map can obtain these start points and end points. These start points and end points are sent to the electronic device, and the set of road sections is determined by the electronic device; or the set of road sections is determined by the server according to the start points and end points. In the process of the electronic device determines the set of road sections, it clusters the start points and end points, so as to determine the start points and the end points with high number of requests, and then obtain the road section to be tested according to the start points and the end points with the high number of requests.

For principle 2, assuming that the target area includes 100,000 kilometers of roads, then 1% of the roads are selected from the 100,000 kilometers, and the 1% of the roads are evenly distributed in the target area, and the proportion of expressways and non-expressways in the 1% of the roads is consistent with the proportion of expressways and non-expressways in the target area.

With this solution, the electronic device achieves the purpose of improving the evaluation result of the first map by selecting a suitable road section to be tested.

In the abovementioned embodiment, the three elements of navigation map evaluation are: the travelling track of the user on the road section to be tested (as shown on the display screen 5 in FIG. 1), the real environment image of each location point and the navigation simulation image of the location point (as shown on the display screen 4 in FIG. 1). Where, the travelling track of the user on the road section to be tested refers to: simulating and generating a section of moving track of the user by the electronic device in accordance with a certain speed and a path; acquiring the real environment image of each location point by the electronic device from the external collection database; acquiring the navigation simulation image of each location point by a way of indoor simulation navigation. The electronic device links these three elements according to the location point, and then can evaluate the first map in accordance with standards of the field road test.

The three elements will be described below respectively.

Element 1: the travelling track of the user on the road section to be tested.

Exemplarily, after the first map is faced to users, many users use the first map every day, and input both the start points and the end points each time when they use the first map. The electronic device clusters the start points and end points, selects start points and end points with the number of requests exceeding the preset number, and takes the road sections corresponding to the start points and the end points as the sections to be tested in the set of road sections. Simultaneously, when selecting the road section to be tested, it is necessary to take into account various road sections, such as highways and expressways. Moreover, the road sections in the set of road sections are evenly distributed in the target area.

After selecting the road section to be tested, the electronic device simulates and generates the travelling track of the user on the road section to be tested at a certain speed.

Element 2: the real environment image of each location point on the road section to be tested.

In the process of acquiring the real environment image of each location point on the road section to be tested, first, the electronic device determines the external collection database from multiple databases. Then, the electronic device determines the real environment image of each location point from the external collection database.

Element 3: the navigation simulation image.

When the electronic device acquires the navigation simulation image of each position point, it determines a section of navigation path from the first map according to the road section to be tested, as shown by the thick black line in FIG. 1. After that, the element representing the user on the first map is triggered to move forward at a preset speed, so that the electronic device generates a simulation video that simulates the user travelling on the road section to be tested according to the navigation prompt of the first map.

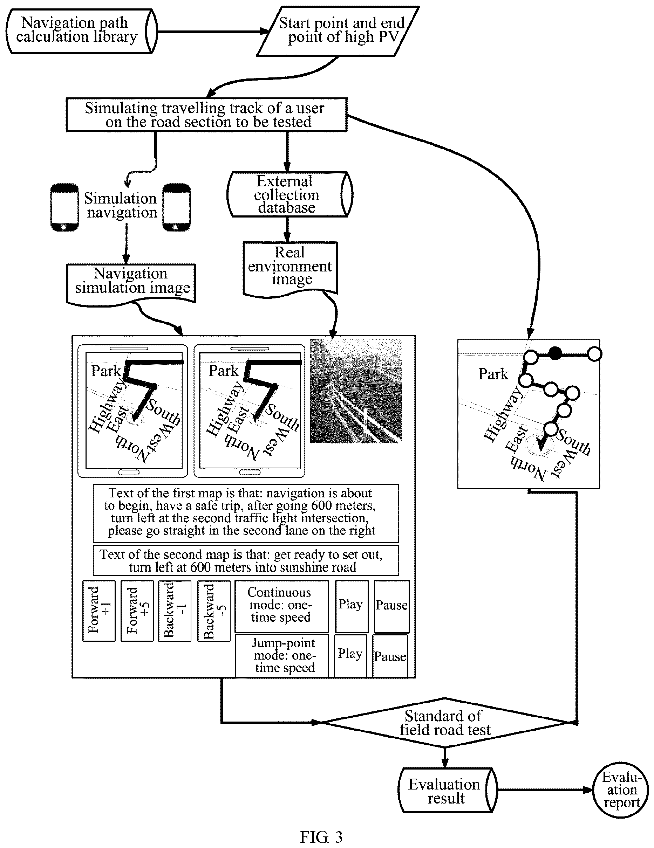

FIG. 3 is a schematic diagram of a process of a navigation map evaluation method provided in an embodiment of the present application. Please refer to Figure 3. The navigation path calculation library stores data such as the start points and the end points input when the users use the first map to navigate. The electronic device clusters the data to calculate the start points and the end points of high page view, PV, traffic, obtains the road section to be tested according to the start points and the end points of high PV, and simulates the track of user on the road section to be tested, that is, the element 1 as mentioned above. The aforementioned element 2 is, for example, a real environment image acquired from the external collection database. The aforementioned element 3 is, for example, a travelling simulation video obtained by recording the screen of the electronic device 1 or the electronic device 2.

After the electronic device obtains the three elements mentioned, it makes each location point in the road section to be tested and the navigation effect to have one to one correspondence, and makes each location point in the road section to be tested and the real environment image to have one to one correspondence. After that, the real environment image and navigation effect of the same location are put in one picture to obtain one frame image of the linkage video.

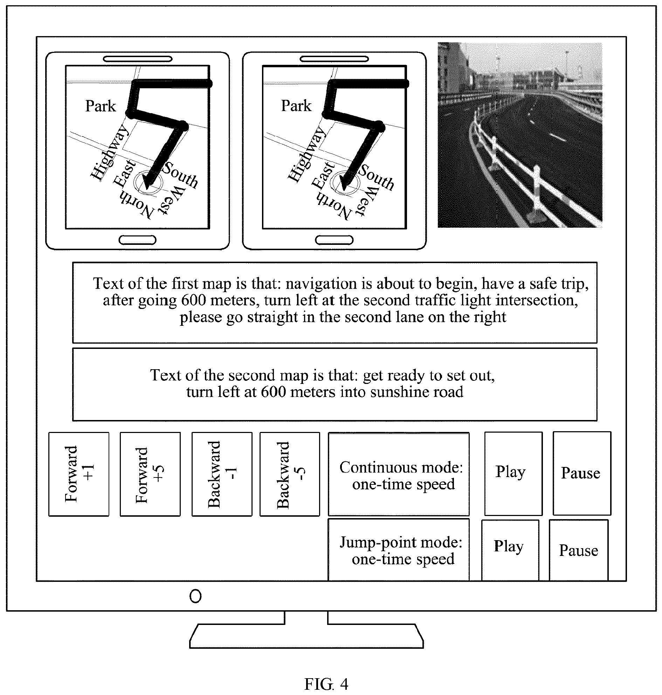

When the first map and the second map are compared, the image includes the navigation simulation image of the first map, the navigation simulation image of the second map, and the real environment image. Meanwhile, if there is voice broadcast in the navigation effect, a text is also displayed in the image simultaneously, and the text is obtained by converting the content of the voice broadcast. Exemplarily, please refer to FIG. 4, which is a schematic diagram of an image of a linkage video in a navigation map evaluation method provided in an embodiment of the present application.

Please refer to FIG. 4, from left to right, there are the navigation simulation image of the first map, the navigation simulation image of the second map, and the real environment image. The text of the first map is that: navigation is about to begin, have a safe trip, after going 600 meters, turn left at the second traffic light intersection, please go straight in the second lane on the right. The text of the second map is that: get ready to set out, turn left at 600 meters into sunshine road.

Meanwhile, while the electronic device controls the display screen 4 to display each frame image of the linkage video, it controls the display screen to display operation buttons, such as forward +1, forward + 5, backward -1, backward-5, play, pause, and so on. Forward +1 is used to indicate forward 1 second each time, forward +5 is used to indicate forward 5 seconds each time, backward -1 is used to indicate backward 1 second each time, and backward-5 is used to indicate backward 5 seconds each time.

In addition, a continuous mode button, a jump-point mode button, and etc. are also displayed on the display screen. Where, the continuous mode button is used to indicate the play speed of the linkage video. When the continuous mode is one-time speed, it means that each frame of the linkage video is displayed in turn at a normal speed. When the continuous mode is double-speed, it means that the speed is 2 times faster, that is, each frame of the linkage video is displayed in turn at a faster speed.

The jump-point mode is used to indicate to jump over one or more position points. For example, when the jump point mode is one-time speed, it means that the display screen displays each frame image of the linkage video in turn. When the jump-point mode is quintuple-speed, it means that the display screen displays an image every 5 location points.

In the foregoing embodiment, in order to intuitively determine the location point of the user in the process of simulation navigation, the electronic device controls the display screen 5 to display the road section to be tested. There is one to one correspondence between the position points on the road section to be tested and the images in the linkage video, so that every time the image of the linkage video changes, the position point on the display screen 5 also changes once. As shown in FIG. 1, the current position point is shown by the black filled circle. After a picture of the linkage video changes, the position point on the display screen 5 is updated, that is, it moves from the black filled circle to a white filled circular tube.

After the electronic device displays the navigation effect on the display screen 4, and displays the location point of the road section to be tested on the display screen 5, the navigation effect corresponding to each image of the linkage video can be flexibly evaluated by operating buttons. In the evaluation process, a double-screen operation mode is adopted, that is, the display screen 4 displays the navigation effect and the real environment image, and the display screen 5 displays each position point in the process of simulation navigation process. For the display screen 4, the electronic device determines the evaluation result of the navigation effect corresponding to each image or some images according to the operation instructions of the user, such as forward, backward, and play.

For the display screen 5, the current location point of the user is checked, and the evaluation result and the problem level are recorded according to the location point. After that, the first map is evaluated according to the evaluation result and the problem level. For example, the evaluation result and the question level of each location point are imported into an evaluation platform, the problems are analyzed and sorted on the evaluation platform, and an evaluation report is outputted.

The foregoing describes the specific implementation of the navigation map evaluation method mentioned in the embodiments of the present application. The following is an apparatus embodiment of the present application, which can be used for performing the method embodiment of the present application. For details not disclosed in the apparatus embodiment of the present application, please refer to the method embodiment of the present application.

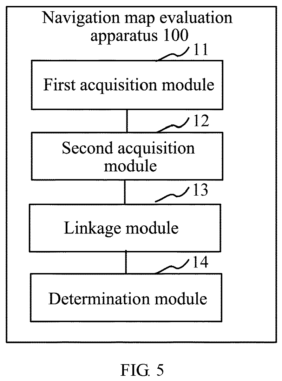

FIG. 5 is a schematic structural diagram of a navigation map evaluation apparatus provided in an embodiment of the present application. The apparatus can be integrated in an electronic device or realized by an electronic device. As shown in FIG. 5, in this embodiment, the navigation map evaluation apparatus 100 may include:
a first acquisition module 11, configured to acquire a travelling simulation video. The travelling simulation video is a simulation video that simulates a user travelling on the road section to be tested according to a navigation prompt of a first map, and the travelling simulation video includes: a navigation simulation image of the first map at each location point on the road section to be tested;
a second acquisition module 12, configured to acquire a real environment image of each location point on the road section to be tested;
a linkage module 13, configured to generate a linkage video according to a navigation simulation image and a real environment image of each location point on the road section to be tested, where different frame images of the linkage video include: navigation simulation images and real environment images of different location points on the road section to be tested;
a determination module 14, configured to determine navigation performance of the first map according to the linkage video.

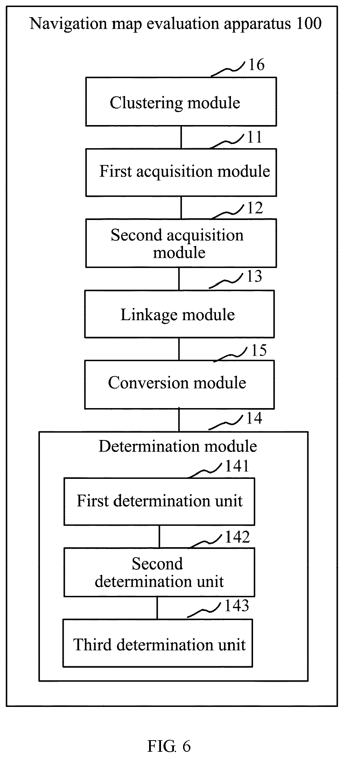

FIG. 6 is another navigation map evaluation apparatus provided in an embodiment of the present application. Please refer to FIG. 6. The navigation map evaluation apparatus 200 provided in this embodiment is on the basis of the above-mentioned FIG. 5, and the determination module 14 includes:
   a first determination unit 141, configured to determine evaluation result of navigation simulation image included in each frame image in the linked video to obtain multiple evaluation results;
   a second determination unit 142, configured to determine a problem level of each of the multiple evaluation results, where the problem level is used to indicate a degree of accuracy of a navigation prompt corresponding to the navigation simulation image;
   a third determination unit 143, configured to determine the navigation performance of the first map according to the problem level of each evaluation result of the multiple evaluation results.

In a feasible design, the first determination unit 141 is configured to: determine real map data of a location point corresponding to a first image for the a real environment image included in the first image in the linkage video, where the first image is any image included in the linkage video; determine whether a navigation prompt corresponding to a navigation simulation image included in the first image is correct according to the real map data, and obtain the evaluation result of the first image.

In a feasible design, please refer to FIG. 6 again. The above-mentioned navigation map evaluation apparatus 100 further includes: a conversion module 15, configured to: after the linkage module 13 generates a linkage video according to the travelling simulation video and the real environment image of each location point on the road section to be tested, when a navigation prompt corresponding to navigation simulation image of a first location point on the road section to be tested includes voice navigation, convert the voice navigation into a text, and add the text to an image corresponding to the first location point in the linkage video.

In a feasible design, the first acquisition module 11 is configured to trigger an element representing the user on the first map product to travel on the navigation path of the first map at a preset speed, so that the electronic device generates a simulation video that simulates the user travelling on the road section to be tested according to a navigation prompt of the first map; and records a screen of the electronic device to obtain the travelling simulation video.

In a feasible design, the travelling simulation video is a simulation video that simulates the user travelling on the road section to be tested according to a navigation prompt of second map, and the travelling simulation video further includes: a navigation simulation image of the second map at each location point on the road section to be tested. The different frame images of the linkage video include: the navigation simulation images of the first map, the navigation simulation images of the second map and the real environment images corresponding to different location points.

In a feasible design, please refer to FIG. 6 again. The mentioned navigation map evaluation apparatus 100 further includes: a clustering module 16, configured to: acquire multiple starting points and ending points within a target area before the first acquisition module 11 acquires the travelling simulation video, where the target area belongs to the area covered by the first map product; and cluster the multiple start points and end points to obtain a set of road sections, where the set of road sections includes a plurality of road sections to be tested, the number of navigation requests for each road section to be tested in the plurality of road sections to be tested exceeds a preset threshold, and the road sections to be tested in the set of road sections evenly distributes in the target area.

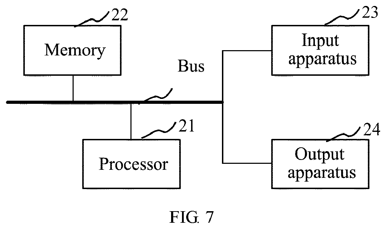

FIG. 7 is a block diagram of an electronic device for implementing the navigation map evaluation method in an embodiment of the present application. The electronic device is intended to represent various forms of digital computers, such as laptop computers, desktop computers, workstations, personal digital assistants, servers, blade servers, large computers, and other computers as appropriate. The electronic device can also represent various forms of mobile devices, such as personal digital assistances, cellular phones, smart phones, wearable devices, and other similar computing devices. The components shown, their connections and relationships, and their functions are merely examples, and are not intended to limit the implementation of the present application described and/or claimed herein.

As shown in FIG. 7, the electronic device includes: one or more processors 21, a memory 22, and interfaces for connecting various components, including a high-speed interface and a low-speed interface. The various components are connected to each other by using different buses, and can be installed on a common motherboard or installed in other ways as required. The processor may process instructions executed in the electronic device, including instructions stored in or on the memory to display graphical information of the GUI on an external input/output apparatus (such as a display apparatus coupled to an interface). In other embodiments, multiple processors and/or multiple buses may be used with multiple memories if necessary. Similarly, multiple electronic devices can be connected, and each device provides some necessary operations (for example, as a server array, a group of blade servers, or a multi-processor system). A processor 21 is taken as an example in FIG. 7.

The memory 22 is a non-transitory computer-readable storage medium provided in the present application. The memory stores instructions executable by at least one processor to enable the at least one processor to execute the navigation map evaluation method provided in the present application. The non-transitory computer-readable storage medium of the present application stores computer instructions, and the computer instructions are used to make a computer execute the navigation map evaluation method provided in the present application.

As a non-transitory computer-readable storage medium, the memory 22 can be configured to store non-transitory software programs, non-transitory computer-executable programs and modules, such as program instructions/modules corresponding to a navigation map evaluation method in an embodiment of the present application (for example, the first acquisition module 11, the second acquisition module 12, the linkage module 13 and the determination module 14 shown in FIG. 5, and the conversion module 15 and the clustering module 16 shown in FIG. 6). The processor 21 executes various functional applications and data processing of the server by running non-transient software programs, instructions, and modules stored in the memory 22, that is, implements the navigation map evaluation method in the foregoing method embodiment.

The memory 22 may include a program storage area and a data storage area, where, the program storage area may store an operating system and an application program required by at least one function; and the data storage area may store data created according to the usage of navigation map evaluation electronic device. In addition, the memory 22 may include a high-speed random access memory, and may also include a non-transitory memory, such as at least one magnetic disk storage device, a flash memory device or other non-transitory solid-state storage device. In some embodiments, the memory 22 may optionally include a memory remotely provided with respect to the processor 21, and these remote memories can be connected to the electronic device for performing the navigation map evaluation method over the network. Examples of the aforementioned network includes, but is not limited to, the Internet, corporate intranets, local area networks, mobile communication networks, and combinations thereof.

The electronic device for performing the navigation map evaluation method may further include: an input apparatus 23 and an output apparatus 24. The processor 21, the memory 22, the input apparatus 23, and the output apparatus 24 may be connected through a bus or in other ways. The connection through a bus is taken as an example in FIG. 7.

The input apparatus 23 can receive input digital or character information, and generate key signal input related to the user settings and function control of the electronic device, such as touch screen, keypad, mouse, track pad, touch pad, indicator stick, one or more mouse buttons, trackballs, joysticks and other input apparatus. The output apparatus 24 may include a display device, an auxiliary lighting apparatus (for example, LED), a tactile feedback apparatus (for example, a vibration motor), and the like. The display device may include, but is not limited to, a liquid crystal display, LCD, a light emitting diode, LED, display, and a plasma display. In some embodiments, the display device may be a touch screen.

Various implementations of the systems and techniques described herein can be implemented in a digital electronic circuit system, an integrated circuit system, a specific ASIC (application specific integrated circuit), a computer hardware, a firmware, a software, and/or combinations thereof. These various embodiments may include: being implemented in one or more computer programs, the one or more computer programs may be executed and/or interpreted on a programmable system including at least one programmable processor, the programmable processor can be a dedicated or universal programmable processor that can receive data and instructions from the storage system, at least one input apparatus, and at least one output apparatus, and transmit the data and instructions to the storage system, the at least one input apparatus and the at least one output apparatus.

These computer programs (also referred to as programs, software, software applications, or codes) include machine instructions for programmable processors, and can be implemented using high-level procedures and/or object-oriented programming languages, and/or assembly/machine languages. As used herein, the terms "machine-readable medium" and "computer-readable medium" refer to any computer program product, device, and/or apparatus used to provide machine instructions and/or data to a programmable processor (for example, magnetic disk, optical disk, memory, programmable logic apparatus (PLD)), including machine-readable media that receive machine instructions as machine-readable signals. The term "machine-readable signal" refers to any signal used to provide machine instructions and/or data to a programmable processor.

In order to provide interaction with a user, the systems and techniques described herein can be implemented on a computer, which includes: a display apparatus for displaying information to the user (for example, a CRT (cathode ray tube) or LCD (liquid crystal display) monitor); and a keyboard and pointing apparatus (for example, a mouse or a trackball) through which the user can provide input to the computer. Other types of apparatus can also be used to provide interaction with a user; for example, the feedback provided to the user can be any form of sensory feedback (for example, visual feedback, auditory feedback, or tactile feedback); and can be in any form (including acoustic input, voice input, or tactile input) to receive input from the user.

The systems and technologies described herein can be implemented in a computing system that includes background components (for example, as a data server), or a computing system that includes middleware components (for example, an application server), or a computing system that includes front-end components (for example, a user computer with a graphical user interface or web browser, the user can interact with the implementation of the system and technology described herein through the graphical user interface or the web browser), or a computing system that includes any combination of such background components, middleware components or front-end components. The components of the system can be connected to each other through any form or medium of digital data communication (for example, a communication network). Example of a communication network includes: local area network, LAN, wide area network, WAN, and the Internet.

The computer system can include a client and a server. The client and server are typically far away from each other and usually interact through a communication network. The relationship between the client and the server is generated through computer programs running on the corresponding computers and having a client-server relationship with each other. The server can be a cloud server, also known as cloud computing server or cloud host, which is a host product in a cloud computing service system, in order to solve the shortcomings of traditional physical host and virtual private server, VPS, such as difficult management and weak business expansion. The server can also be a system of a distributed system or a server combined with blockchain.

An embodiment of the present application also provides a navigation map evaluation method, including: determining a navigation path corresponding to a road section to be tested on the first map; simulating a user travelling on the road section to be tested by using the navigation path to obtain a travelling simulation video; acquiring a real environment image of each location point on the road section to be tested; generating a linkage video according to the real environment image and the travelling simulation video of each location point on the road section to be tested; and determining navigation performance of the first map according to the linkage video.

In the navigation map evaluation method provided in the embodiments of the present application, the electronic device acquires the travelling simulation video of the road section to be tested and the real environment image of each location point on the road section to be tested, generates the linkage video according to the travelling simulation video and the real environment image of each location point on the road section to be tested, and evaluates the first map according to the linkage video. In the process, the navigation map is evaluated through a way of simulation, which achieves the purpose of reducing the cost of manpower and material resources in the process of the navigation map evaluation.

It should be understood that the various forms of processes shown above can be used and the steps can be reordered, added or deleted. For example, the steps described in the present application can be performed in parallel, sequentially, or in a different order, as long as the desired result of the technical solution disclosed in the present application can be achieved, which is not limited herein.

The foregoing specific implementations do not constitute a limitation on the protection scope of the present application. Those skilled in the art should understand that various modifications, combinations, sub-combinations and substitutions can be made according to design requirements and other factors. Any amendments, equivalent substitutions and improvements made within the principle of the present application shall be included in the protection scope of the present application.

## Claims

1. A navigation map evaluation method, comprising:
acquiring (101) a travelling simulation video, wherein the travelling simulation video is: a simulation video that simulates a user travelling on a road section to be tested according to a navigation prompt of a first map, and the travelling simulation video comprises: a navigation simulation image of the first map at each location point on the road section to be tested;
acquiring (102) a real environment image of each location point on the road section to be tested;
generating (103) a linkage video according to the navigation simulation image and the real environment image of each location point on the road section to be tested, wherein different frame images of the linkage video comprise: navigation simulation images and real environment images at different location points on the road section to be tested; and
determining (104) navigation performance of the first map according to the linkage video.

2. The navigation map evaluation method according to claim 1, wherein the determining (104) navigation performance of the first map according to the linkage video comprises:
determining evaluation result of navigation simulation image comprised in each frame image in the linkage video to obtain multiple evaluation results;
determining a problem level of each evaluation result of the multiple evaluation results, wherein the problem level is used to indicate a degree of accuracy of a navigation prompt corresponding to the navigation simulation image; and
determining the navigation performance of the first map according to the problem level of each evaluation result of the multiple evaluation results;
wherein the determining evaluation result of navigation simulation image comprised in each frame image of in the linkage video to obtain multiple evaluation results comprises:
determining real map data of a location point corresponding to a first image for a real environment image comprised in the first image in the linkage video, wherein the first image is any one image comprised in the linkage video; and
determining whether a navigation prompt corresponding to the navigation simulation image comprised in the first image is correct according to the real map data, to obtain an evaluation result of the first image.

3. The navigation map evaluation method according to claim 1 or 2, wherein after the generating (103) a linkage video according to the navigation simulation image and the real environment image of each location point on the road section to be tested, the method further comprises:
when a navigation prompt corresponding to navigation simulation image of a first location point on the road section to be tested comprises voice navigation, converting the voice navigation into a text; and
adding the text to an image corresponding to the first location point in the linkage video.

4. The navigation map evaluation method according to claim 1 or 2, wherein the acquiring (101) a travelling simulation video comprises:
triggering an element representing the user on the first map to drive on a navigation path of the first map at a preset speed, so that an electronic device generates the simulation video that simulates the user travelling on the road section to be tested according to the navigation prompt of the first map; and
recording a screen of the electronic device to obtain the travelling simulation video.

5. The navigation map evaluation method according to claim 1 or 2, wherein:
the travelling simulation video is: a simulation video that simulates the user travelling on the road section to be tested according to a navigation prompt of a second map, and the travelling simulation video further comprises: a navigation simulation image of the second map at each location point on the road section to be tested;
the different frame images of the linkage video comprise: navigation simulation images of the first map, navigation simulation images of the second map and the real environment images corresponding to different location points.

6. The navigation map evaluation method according to claim 1 or 2, wherein before the acquiring (101) a travelling simulation video, the method further comprises:
acquiring multiple start points and end points within a target area, wherein the target area belongs to an area covered by the first map; and
clustering the multiple start points and end points to obtain a set of road sections, the set of road sections comprises a plurality of road sections to be tested, wherein the number of navigation requests for each road section to be tested in the plurality of road sections to be tested exceeds a preset threshold, and the road sections to be tested of the set of road sections evenly distribute in the target area.

7. A navigation map evaluation apparatus (100), comprising:
a first acquisition module (11), configured to acquire a travelling simulation video, wherein the travelling simulation video is: a simulation video that simulates a user travelling on a road section to be tested according to a navigation prompt of a first map, and the travelling simulation video comprises: a navigation simulation image of the first map at each location point on the road section to be tested;
a second acquisition module (12), configured to acquire a real environment image of each location point on the road section to be tested;
a linkage module (13), configured to generate a linkage video according to the navigation simulation image and the real environment image of each location point on the road section to be tested, wherein different frame images of the linkage video comprise: navigation simulation images and real environment images at different location points on the road section to be tested; and
a determination module (14), configured to determine navigation performance of the first map according to the linkage video.

8. The navigation map evaluation apparatus (100) according to claim 7, wherein the determination module (14) comprises:
a first determination unit (141), configured to determine evaluation result of navigation simulation image comprised in each frame image in the linkage video to obtain multiple evaluation results;
a second determination unit (142), configured to determine a problem level of each evaluation result of the multiple evaluation results, wherein the problem level is used to indicate a degree of accuracy of a navigation prompt corresponding to the navigation simulation image; and
a third determination unit (143), configured to determine the navigation performance of the first map according to the problem level of each evaluation result of the multiple evaluation results;
wherein:
the first determination unit (141), configured to: determine real map data of a location point corresponding to a first image for a real environment image comprised in the first image in the linkage video, wherein the first image is any one image comprised in the linkage video; and determine whether a navigation prompt corresponding to the navigation simulation image comprised in the first image is correct according to the real map data, to obtain an evaluation result of the first image.

9. The navigation map evaluation apparatus (100) according to claim 7 or 8, further comprising:
a conversion module (15), configured to: after the linkage module (13) generates a linkage video according to the navigation simulation image and the real environment image of each location point on the road section to be tested, when a navigation prompt corresponding to navigation simulation image of a first location point on the road section to be tested comprises voice navigation, convert the voice navigation into a text, and add the text to an image corresponding to the first location point in the linkage video.

10. The navigation map evaluation apparatus (100) according to claim 7 or 8, wherein:
the first acquisition module (11), configured to: trigger an element representing the user on the first map to drive on a navigation path of the first map at a preset speed, so that an electronic device generates the simulation video that simulates the user travelling on the road section to be tested according to the navigation prompt of the first map; and record a screen of the electronic device to obtain the travelling simulation video.

11. The navigation map evaluation apparatus (100) according to claim 7 or 8, wherein:
the travelling simulation video is: a simulation video that simulates the user travelling on the road section to be tested according to a navigation prompt of second map, and the travelling simulation video further comprises: a navigation simulation image of the second map at each location point on the road section to be tested;
the different frame images of the linkage video comprise: navigation simulation images of the first map, navigation simulation images of the second map and the real environment images corresponding to different location points.

12. The navigation map evaluation apparatus (100) according to claim 7 or 8, further comprising:
a clustering module (16), configured to: acquire multiple start points and end points within a target area before the first acquisition module (11) acquires the travelling simulation video, wherein the target area belongs to an area covered by the first map; and
cluster the multiple start points and end points to obtain a set of road sections, wherein the set of road sections comprises a plurality of road sections to be tested; the number of navigation requests for each road section to be tested in the plurality of road sections to be tested exceeds a preset threshold, and the road sections to be tested of the set of road sections evenly distributes in the target area.

13. An electronic device, comprising:
at least one processor (21); and
a memory (22) communicatively connected with the at least one processor (21); wherein:
the memory (22) stores thereon instructions executable by the at least one processor (21), and when being executed by at least one processor (21), the instructions enable the at least one processor (21) to carry out the method according to any one of claims 1 to 6.

14. A non-transitory computer-readable storage medium storing thereon computer instructions which are used to cause an electronic device to carry out the method according to any one of claims 1 to 6.

15. A computer program product, when the computer program product runs on an electronic device, causes the electronic device to carry out the method according to any one of claims 1 to 6.
